# FASCICULE DE BREVET EUROPEEN

(11) **EP 0 383 663 B1**
(45) Date de publication et mention de la délivrance du brevet: **15.12.1993**
(21) Numéro de dépôt: 90400369.6
(22) Date de dépôt: 12.02.1990
(51) Int. Cl.: B64C 13/04, G05G 9/04, B64C 13/12

(54) **Dispositif de commande à manche basculant et système de commande de vol pour aéronef comportant au moins un tel dispositif de commande.**
Steuervorrichtung mit einem schwenkbaren Knüppel und damit ausgerüstetes Flugsteuerungssystem eines Flugzeuges
Control device with a tilting stick, and aircraft flight control system provided with such a device

(30) Priorité: 17.02.1989 FR 8902116
(43) Date de publication de la demande: 22.08.1990
(73) Titulaire: AEROSPATIALE Société Nationale Industrielle, 75781 Paris Cédex 16 (FR)
(72) Inventeur: Tizac, Pierre, F-31170 Tournefeuille (FR)
(74) Mandataire: Bonnetat, Christian

(56) Documents cités:
- EP-A- 0 204 598
- GB-A- 2 073 114
- US-A- 3 149 806
- US-A- 3 771 037
- US-A- 3 776 058

## Description

La présente invention concerne un dispositif de commande à manche basculant, ainsi qu'un système de commande de vol pour aéronef comportant au moins un tel dispositif de commande.

Quoique non exclusivement, elle s'applique tout particulièrement aux systèmes de pilotage pour aéronef et elle sera ci-après plus spécialement décrite en référence à une telle application, étant bien entendu qu'il ne peut en résulter une limitation de la portée de l'invention.

On sait que de nombreuses machines, telles que avions, hélicoptères, chars d'assaut, engins de travaux publics, etc..., sont pourvues d'un ensemble d'éléments commandés pouvant être actionnés à partir de l'un ou l'autre de deux postes de commande conjugués, contrôlés par deux opérateurs distincts (appelés pilote et copilote dans le cas de véhicules) et équiqués chacun d'un organe de commande du type manche, articulé de façon à pouvoir pivoter dans n'importe quelle direction. Ces deux organes de commande sont reliés auxdits organes à commander et sont couplés entre eux de sorte que chacun desdits opérateurs dispose de l'ensemble des commandes desdits organes à commander et que le basculement volontaire par actionnement direct de l'un desdits organes de commande par un opérateur entraîne un basculement induit identique de même sens de l'autre.

Jusqu'à présent, la transmission des ordres de commande entre un manche actionné par un opérateur et un organe à commander s'effectuait de façon mécanique, de sorte que lesdits manches étaient de dimensions relativement importantes et susceptibles de supporter et de transmettre des efforts mécaniques importants. De tels manches étaient donc prévus pour être disposés devant lesdits opérateurs, tenus à deux mains par chaque opérateur et actionnés par action des avant-bras de celui-ci, l'amplitude et l'intensité de leurs mouvements étant conditionnées par les résistances à vaincre pour la manoeuvre des commandes mécaniques.

Cependant, de plus en plus, les commandes mécaniques sont remplacées par des commandes électriques présentant de nombreux avantages, par exemple en ce qui concerne la masse, l'encombrement, la maintenance, la prise en compte de lois de commande complexes, etc... Il en résulte que lesdits manches sont reliés et associés à des capteurs électriques qui détectent les variations de position desdits manches et qui contrôlent des commandes électriques actionnant lesdits organes commandés en fonction des indications desdits capteurs. Dans ces conditions, lesdits manches ne transmettent que des efforts très faibles et leurs dimensions et leur résistance mécanique peuvent être considérablement diminuées. C'est ainsi que l'on est arrivé à la conception et à l'utilisation de manches de faibles dimensions appelés "minimanches" ou "ministicks", pouvant être tenus et actionnés par une seule main d'un opérateur.

En plus des avantages mentionnés ci-dessus concernant l'utilisation des commandes électriques, de tels minimanches permettent de dégager l'espace en avant des opérateurs, afin d'optimiser le regroupement d'autres commandes devant ceux-ci, de sorte que chaque minimanche est disposé latéralement par rapport auxdits opérateurs. De plus, notamment lorsque les deux postes de commande des opérateurs sont parallèles (ce qui est généralement le cas dans un véhicule dans lequel lesdits postes sont disposés face à l'avant de celui-ci), afin de respecter la symétrie de la machine par rapport à un axe passant entre lesdits postes, l'un des minimanches est disposé à gauche de l'opérateur de gauche et l'autre à droite de l'opérateur de droite. Dans un tel cas, l'opérateur de gauche tient donc le minimanche associé de sa main gauche, alors que l'opérateur de droite tient le sien de sa main droite.

Lorsque de tels minimanches connus sont appliqués à la commande d'un aéronef, le basculement d'avant en arrière et d'arrière en avant est utilisé pour commander l'aéronef en tangage (profondeur), tandis que le basculement de gauche à droite et de droite à gauche est mis à profit pour commander l'aéronef en roulis. Toutefois, aucun autre déplacement du minimanche n'est disponible pour la commande en lacet (direction). Aussi, dans les aéronefs connus à commande de vol électrique, la commande en lacet reste mécanique, à l'aide d'un palonnier classique.

Le document US-A-3 776 058 montre un dispositif selon le préambule de la revendication 1 et un système selon le préambule de la revendication 9, qui permet la commande électrique d'un aéronef en lacet, à partir d'un minimanche, c'est-à-dire la suppression d'un tel palonnier à bord dudit aéronef.

Le présente invention a pour but de simplifier la construction de ce dispositif/système connu. Ceci est obtenu au moyen des caractéristiques des parties caractérisantes.

A cette fin, selon l'invention, le dispositif selon le préambule de la revendication 1 pour la commande d'éléments d'une machine, comporte des aiguilles coulissantes déplacées par le plateau ou analogue et activant les premier et second capteurs de position. La présente invention concerne également un système selon le préambule de la revendication 9 de commande de vol destiné à un aéronef comportant des gouvernes de commande en tangage, des gouvernes de commande en roulis et des gouvernes de commande en lacet, qui comporte des aiguilles coulissantes déplacées par le plateau ou analogue et activant les premier et second capteurs de position.

On remarquera qu'un tel système de commande de vol peut être avantageusement du type dans lequel on prévoit un ou plusieurs calculateurs de vol, puisque tous les ordres de commande de gouvernes se présentent sous forme électrique.

De façon usuelle, on peut prévoir deux dispositifs de commande du type ci-dessus, l'un pour le pilote et l'autre pour un copilote. Dans ce cas, lesdits premier, second et troisième signaux provenant des deux dispositifs de commande sont adressés au(x)dit(s) calculateur(s) de vol qui délivre(nt) des consignes de commande uniques aux gouvernes correspondantes.

Les figures du dessin annexé feront bien comprendre comment l'invention peut être réalisée.

La figure 1 montre, en perspective du dessus, un avion civil gros porteur, illustrant plus particulièrement les gouvernes de roulis, de tangage et de lacet.

La figure 2 est une vue partielle, en perspective, de l'intérieur du poste de pilotage de l'avion de la figure 1.

La figure 3 est une coupe axiale d'un mode de réalisation du dispositif de commande à minimanche, conforme à la présente invention.

La figure 4 est une coupe selon la ligne IV-IV de la figure 3, le capuchon souple d'étanchéité étant supposé ôté.

La figure 5 est une coupe simplifiée selon la ligne V-V de la figure 3.

La figure 6 illustre schématiquement le système de commande de vol, conforme à l'invention, de l'avion de la figure 1.

Sur ces figures, des références identiques désignent des éléments semblables.

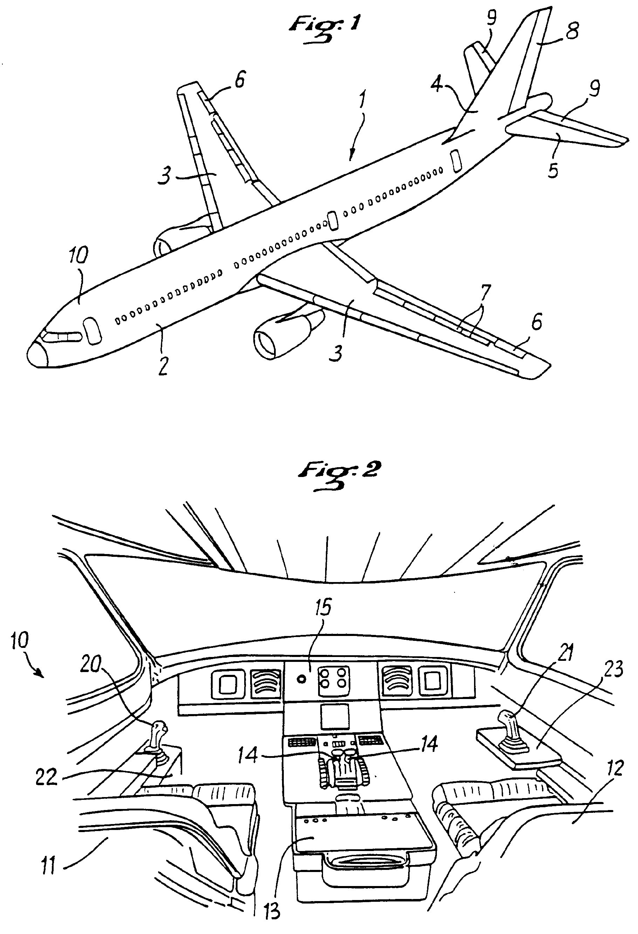

L'avion civil gros porteur 1, montré en perspective sur la figure 1, comporte un fuselage 2, des ailes 3, un empennage vertical 4 et un empennage horizontal 5.

Sur les ailes 3 sont prévus des ailerons 6 de bord de fuite pour la commande en roulis et des déflecteurs de roulis 7. Sur l'empennage vertical 4 est prévue une gouverne de direction 8, tandis que des gouvernes de profondeur 9 sont articulées sur le bord de fuite de l'empennage horizontal 5.

Sur la figure 2, on a représenté schématiquement et partiellement, en vue axiale en perspective de l'arrière vers l'avant, l'intérieur du poste de pilotage 10 de l'avion 1, comportant un siège 11 pour un pilote et un siège 12 pour un copilote. De façon usuelle, la place de pilotage destinée au pilote se trouve à gauche, alors que celle du copilote se trouve à droite. Les deux places de pilotage sont séparées l'une de l'autre par une console centrale 13 pourvue d'une pluralité d'organes de commande et de contrôle, tels que des poignées 14 de commande des gaz. Par ailleurs, sur le tableau de bord 15 sont prévus différents organes de contrôle.

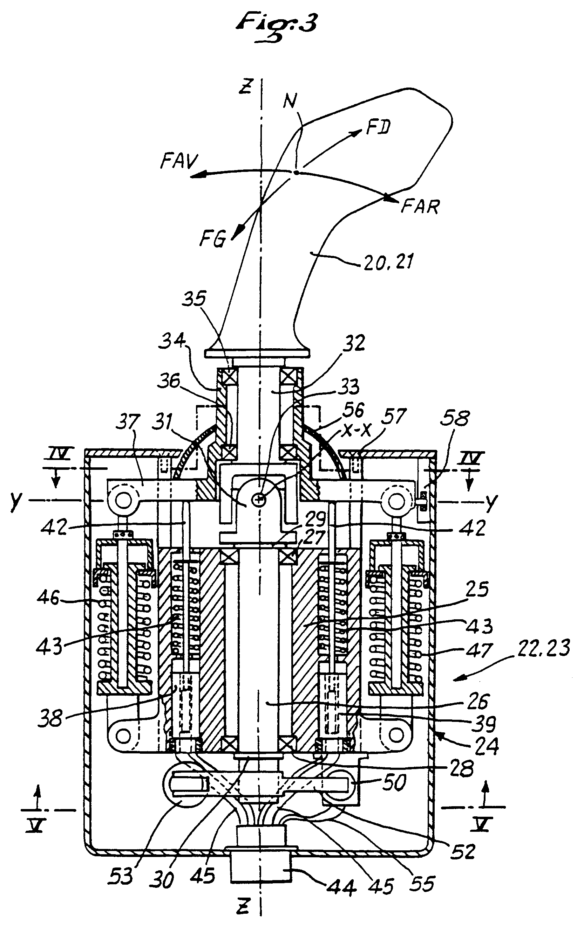

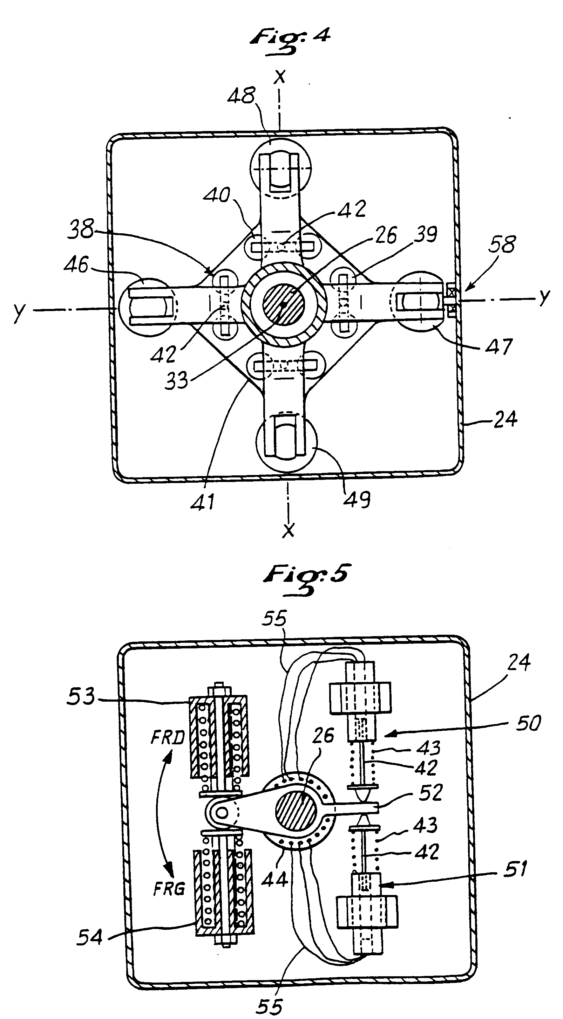

On remarquera que, dans le poste de pilotage 10 représenté sur la figure 2, les deux manches de pilotage usuels se trouvant devant le pilotage et le copilote, respectivement, et destinés à être tenus et manoeuvrés à deux mains, ont été supprimés. Ces manches usuels, de grande dimension, ont été remplacés par de simples poignées pivotantes 20 et 21, respectivement disposées à gauche du pilote et à droite du copilote ; ainsi, la poignée 20 est destinée à être actionnée par la main gauche du pilote et la poignée 21 par la main droite du copilote. Par exemple (voir également les figures 3 et 4), l'avion est commandé en profondeur en basculant la poignée 20, ou la poignée 21, parallèlement au plan longitudinal médian de l'avion autour d'un axe transversal X-X et en roulis en basculant l'une desdites poignées latéralement, transversalement audit plan longitudinal médian, autour d'un axe longitudinal Y-Y. Comme on le verra ci-après, chaque poignée peut, à partir d'une position neutre N être basculée vers l'avant (flèche FAV), vers l'arrière (flèche FAR), vers la droite (flèche FD) et vers la gauche (flèche FG).

Les poignées 20 et 21 sont appelées "minimanches" et sont, comme cela ressortira de la suite, électriquement couplées, pour que l'avion soit pilotable à partir de l'une ou l'autre d'entre elles, ou à partir des deux.

Comme le montre la figure 3, chaque poignée 20,21 est associée à un mécanisme 22 ou 23, respectivement. Chacun de ces mécanismes 22 ou 23 comporte, à l'intérieur d'un boîtier 24, un bloc fixe 25. Celui-ci est traversé centralement par un arbre 26, qui peut tourner autour de son axe Z-Z par rapport audit bloc 25 grâce à des roulements 27 et 28, mais qui est empêché de se déplacer par rapport audit bloc, notamment grâce à des butées axiales 29 et 30. Les deux extrémités de l'arbre 26 font saillie à l'extérieur dudit bloc 25.

A l'une de ses extrémités, l'arbre 26 est relié, par un joint à la Cardan 31, à un arbre auxiliaire 32, solidaire de la poignée 20 ou 21. Le point d'articulation 33 du joint 31 est confondu avec l'intersection des axes X-X, Y-Y et Z-Z.

L'arbre auxiliaire 32 est entouré par un manchon 34, par rapport auquel il peut tourner, grâce à des roulements 35 et 36. En regard du bloc 25, ledit manchon 34 est solidaire d'un organe 37, tel qu'un plateau, une croix ou analogue, susceptible de coopérer avec des capteurs de position 38 à 41, disposés deux à deux symétriquement autour de l'axe Z-Z, respectivement dans les plans X,X-Z,Z et Y,Y-Z,Z.

Par exemple, les capteurs de position 38 à 41 sont du type transformateur à noyau plongeur, celui-ci étant solidaire d'une aiguille 42 pressée vers l'extérieur par un ressort 43. Ainsi, l'extrémité des aiguilles 42 des capteurs 38 à 41 est en appui contre la face de l'organe 37, en forme de plateau, de croix ou analogue, opposée à l'arbre auxiliaire 32 et à la poignée 20 ou 21. En position neutre N de celle-ci, les capteurs 38 à 41 sont réglés pour n'émettre aucun signal. L'alimentation desdits capteurs, ainsi que le prélèvement des signaux qu'ils sont susceptibles d'émettre, sont effectués par l'intermédiaire d'une prise 44, qui est solidaire du boîtier 24 et à laquelle lesdits capteurs sont reliés par des conducteurs 45.

Par ailleurs, l'organe 37 est empêché de tourner autour de l'axe Z-Z, grâce à une liaison glissante 58, qui ne lui interdit pas de basculer autour des axes X-X et Y-Y.

Entre le bloc 25 et l'organe 37, peut de plus être disposée une suspension à ressorts, comprenant par exemple quatre dispositifs à ressort 46 à 49, disposés deux à deux symétriquement autour de l'axe Z-Z. Une telle suspension à ressort a pour objet d'introduire une sensation d'effort lors du basculement de la poignée 20,21, ainsi que de ramener celle-ci en position neutre lorsqu'elle est relâchée.

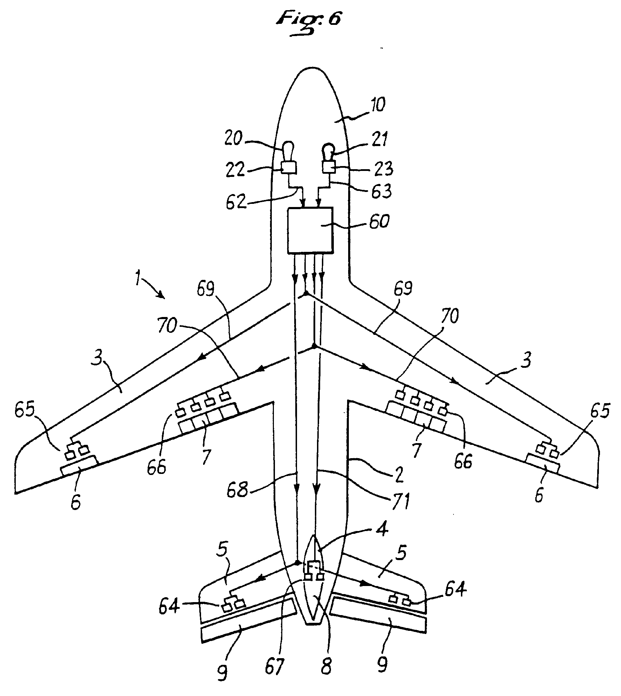

Comme on peut le voir sur les figures 3 et 5, l'extrémité de l'arbre 26, opposée au joint 31, coopère avec deux capteurs de position 50 et 51, par exemple du même type que les capteurs 38 à 41, susceptibles de délivrer un signal représentatif de l'amplitude et du sens de rotation de l'arbre 36 autour de son axe Z-Z (flèches FRG et FRD). Par exemple, à cet effet, une palette 52 est rendue solidaire de l'arbre 26, transversalement à celui-ci, et lesdits capteurs 50 et 51 s'appuient par leurs aiguilles 42, poussées par les ressorts 43, contre les faces opposées de ladite palette 52.

Deux dispositifs de sensation d'effort 53 et 54, par exemple à ressort, permettent d'introduire une certaine résistance à la rotation volontaire de l'arbre 26 autour de son axe Z-Z et ramènent automatiquement celui-ci en position neutre de rotation.

La liaison entre lesdits dispositifs 53 et 54 et l'arbre 26 peut être semblable à celle prévue entre ce dernier et les capteurs 50 et 51.

Bien entendu, les capteurs 50 et 51, ainsi que les dispositifs 53 et 54, peuvent être portés par le bloc 25. Les capteurs 50 et 51 sont reliés à la prise 44 par des fils d'alimentation et de prélèvement de signal 55.

Un capuchon souple 56, entourant le manchon 34, assure l'étanchéité entre celui-ci et la plaque supérieure 57 du boîtier 24, traversée par ledit manchon.

Dans le schéma de système de commande de vol illustré par la figure 6, il est prévu des calculateurs de vol 60, auxquels sont reliés les dispositifs de commande 22 et 23, par l'intermédiaire de lignes 62 et 63 connectées aux prises 44 desdits dispositifs. Par ailleurs, on prévoit des servocommandes électriques 64 pour la commande des gouvernes de profondeur 9, des servocommandes électriques 65 et 66 respectivement pour la commande des ailerons 6 et des déflecteurs de roulis 7 et des servocommandes électriques 67 pour la commande de la gouverne de direction 8. Les servocommandes électriques 64,65,66 et 67 sont commandées par les calculateurs de vol 60, auxquels elles sont respectivement reliées par des lignes 68,69,70 et 71.

Ainsi, si le pilote (non représenté) bascule, avec sa main gauche, le manche 20,32 vers l'avant, autour de l'axe X-X (flèche FAV), ce manche pivote autour du point 33, et l'arbre 32 entraîne en basculement le manchon 34, auquel il est mécaniquement lié par les roulements 35 et 36. Par suite, l'organe 37 bascule autour de l'axe X-X, à l'encontre de l'action élastique du dispositif de sensation d'effort 46, en enfonçant l'aiguille 42 du capteur 38. Ce dernier délivre donc à sa sortie un signal représentatif du basculement du manche 20,32 et ce signal est transmis, aux calculateurs de vol 60, à travers les conducteurs 45, la prise 44, et la ligne 62. Les calculateurs 60 élaborent, à partir de ce signal, un signal de commande à piquer des gouvernes de profondeur 9, adressé aux servocommandes électriques 64, par la ligne 68.

On conçoit aisément, à partir de ce qui vient d'être décrit, qu'un signal de commande à cabrer pour les gouvernes 9, puisse être obtenu de façon semblable en basculant le manche 20,32 vers l'arrière, autour de l'axe X-X (flèche FAR), grâce à la coopération de l'organe 37 et du capteur 39.

De même, un signal de commande en roulis, vers la gauche ou vers la droite, destiné à être adressé aux servocommandes 65 et/ou 66 des volets 6 et des déflecteurs de roulis 7 par les calculateurs 60 et les lignes 69,70, peut être obtenu en basculant le manche 20,32 autour de l'axe Y-Y (flèches FG et FD). Dans ce cas, l'organe 37, lié au manchon 34 qui est entraîné en basculement par le manche 20,32, coopère avec les capteurs 40 et 41 pour délivrer un signal de roulis qui est adressé aux calculateurs 60, par la ligne 62.

On voit donc que le basculement de manche 20,32 permet la commande de l'avion 1 en profondeur et en roulis.

Maintenant, si le pilote fait tourner la poignée 20 sur elle-même, l'arbre auxiliaire 32 tourne par rapport au manchon 34, ce qui entraîne l'arbre 26 en rotation autour de l'axe Z-Z.

La palette 52 tourne donc autour dudit axe, à l'encontre de l'action de l'un des dispositifs de sensation d'effort 53 ou 54, en enfonçant l'aiguille 42, de l'un des capteurs 50 ou 51. Un signal correspondant à cette rotation est émis par ledit capteur et adressé aux calculateurs 60 par les conducteurs 55, la prise 44 et la ligne 62.

Les calculateurs 60 élaborent alors, à partir de ce signal, un signal de commande de direction (lacet) adressé aux servocommandes 67 par la ligne 71. Aux deux sens de rotation de la poignée 20 sur elle-même, sont associés respectivement un ordre de lacet à gauche ou à droite (flèches FRG et FRD).

Le dispositif 22 permet donc également de commander l'avion 1 en lacet.

Dans le cas où le pilote et le copilote adresseraient en même temps des ordres de commande aux calculateurs 60, par actionnement simultané des poignées 20 et 21, lesdits calculateurs 60 délivreraient, à partir desdits ordres, une consigne de commande unique, adressée aux servocommandes 64 à 67 correspondantes et élaborée selon un programme préenregistré dans lesdits calculateurs.

On voit donc que, grâce à l'invention, on obtient un dispositif de commande à manche basculant compact, de faible masse et susceptible de commander toutes les manoeuvres d'un aéronef. Ce dispositif de commande n'a que de faibles jeux et de faibles frottements et ses éléments peuvent être montés sous précontrainte.

## Revendications

1. Dispositif pour la commande d'éléments (6,7,8,9) d'une machine (1), comportant un manche (20,32) destiné à être actionné par une seule main d'un opérateur et monté basculant autour d'un premier et d'un second axe (X-X et Y-Y), axes qui sont croisés et transversaux audit manche, de sorte que celui-ci peut basculer autour du point de croisement (33) desdits premier et second axes, au moins un premier et un second capteurs de position (38,39,40,41) étant prévus pour délivrer un premier et un second signal électrique respectivement représentatifs du basculement dudit manche autour dudit premier et dudit second axe, lesdits signaux électriques contrôlant chacun au moins un actionneur (64,66) commandant au moins l'un desdits éléments de la machine, ledit manche étant monté rotatif sur lui-même autour de son axe longitudinal (Z-Z) et le dispositif comportant au moins un troisième capteur de position (50,51) délivrant un troisième signal électrique représentatif de la rotation dudit manche autour de lui-même, ledit troisième signal électrique contrôlant au moins un autre actionneur (67) commandant au moins un autre élément de ladite machine, ledit dispositif comportant un arbre rotatif (26) auquel est associé ledit troisième capteur de position (50,51) et ledit manche (20-32) étant articulé audit arbre (26) de façon à pouvoir basculer autour dudit point de croisement (33) desdits premier et second axes (X-X et Y-Y), ledit manche traversant un manchon (34) par rapport auquel il est monté, avec un faible jeu, rotatif autour de lui-même, et ledit manchon étant solidaire d'un plateau ou analogue (37) coopérant avec lesdits premier et second capteurs de position, tandis qu'est prévu un bloc (25) par rapport auquel est monté centralement ledit arbre rotatif (26) et périphériquement lesdits premier et second capteurs de position (38-41),
caractérisé en ce qu'il comporte des aiguilles coulissantes (42) déplacées par ledit plateau ou analogue (37) et activant lesdits premier et second capteurs de position (38-41).

2. Dispositif selon la revendication 1,
caractérisé en ce qu'il comporte au moins une autre aiguille coulissante (42) déplacée par la rotation dudit arbre (26) et activant ledit troisième capteur de position (50,51).

3. Dispositif selon l'une des revendications 1 ou 2,
caractérisé en ce que ledit manche et ledit arbre rotatifs sont articulés par l'intermédiaire d'un joint à la Cardan.

4. Dispositif selon la revendication 3,
caractérisé en ce que ledit joint à la Cardan (31) est prévu à l'une des extrémités dudit arbre (26) faisant saillie à l'extérieur dudit bloc (25), tandis que le ou les troisièmes capteurs (50,51) sont prévus à l'extrémité opposée dudit arbre rotatif.

5. Dispositif selon l'une des revendications 1 à 4,
caractérisé en ce que ledit manchon (34) est empêché de tourner autour de l'axe (58) dudit arbre rotatif.

6. Dispositif selon l'une des revendications 1 à 5, comportant des organes de sensation d'effort (46,49) associés au basculement dudit manche autour desdits premier et second axes,
caractérisé en ce que lesdits organes de sensation d'effort sont fixés audit bloc (25) et actionnés par ledit plateau ou analogue (37).

7. Dispositif selon l'une quelconque des revendications 1 à 6,
caractérisé en ce qu'il comporte au moins un organe de sensation d'effort (53,54) associé à la rotation du manche sur lui-même.

8. Dispositif selon la revendication 7,
caractérisé en ce que ledit organe de sensation d'effort (53,54) associé à la rotation du manche sur lui-même est fixé sur ledit bloc (25).

9. Système de commande de vol destiné à un aéronef comportant des gouvernes de commande en tangage, des gouvernes de commande en roulis et des gouvernes de commande en lacet, ledit système comportant au moins un dispositif de commande comprenant un manche monté basculant autour d'un premier et d'un second axe, axes qui sont croisés et transversaux audit manche, de sorte que celui-ci peut basculer autour du point de croisement desdits premier et second axes, au moins un premier et un second capteurs de position étant prévus pour délivrer un premier et un second signal électrique respectivement représentatifs du basculement dudit manche autour dudit premier et dudit second axe ; ledit manche étant monté rotatif sur lui-même autour de son axe longitudinal et ledit dispositif comportant au moins un troisième capteur de position délivrant un troisième signal électrique représentatif de la rotation dudit manche autour de lui-même, lesdites gouvernes de commande en tangage et en roulis étant commandées par lesdits premier et second capteurs de position, tandis que ladite gouverne de lacet est commandée par ledit troisième capteur de position, ledit dispositif comportant un arbre rotatif auquel est associé ledit troisième capteur de position et ledit manche étant articulé audit arbre de façon à pouvoir basculer autour dudit point de croisement desdits premier et second axes, ledit manche traversant un manchon (34) par rapport auquel il est monté, avec un faible jeu, rotatif autour de lui-même, et ledit manchon étant solidaire d'un plateau ou analogue (37) coopérant avec lesdits premier et second capteurs de position, tandis qu'est prévu un bloc (25) par rapport auquel est monté centralement ledit arbre rotatif (26) et périphériquement lesdits premier et second capteurs de position (38,41),
caractérisé en ce qu'il comporte des aiguilles coulissantes (42) déplacées par ledit plateau ou analogue (37) et activant lesdits premier et second capteurs de position (38,41).

10. Système selon la revendication 9, comportant un ou plusieurs calculateurs de vol et deux tels dispositifs de commande, l'un pour le pilote et l'autre pour un copilote,
caractérisé en ce que lesdits premier, second et troisième signaux provenant des deux dispositifs de commande sont adressés au(x))dit(s) calculateur(s) de vol qui délivre(nt) des consignes de commande uniques aux gouvernes correspondantes.

## Patentansprüche

1. Vorrichtung zur Steuerung von Elementen (6, 7, 8, 9) einer Maschine (1) mit einem Knüppel (20, 32), der mit einer Hand von einem Bediener betätigt werden kann und kippbar um eine erste und zweite Achse (X-X und Y-Y) montiert ist, wobei die Achsen sich kreuzen und senkrecht zu dem besagten Knüppel stehen, so daß dieser um den Kreuzungspunkt (33) der besagten ersten und zweiten Achse kippen kann, mit mindestens einem ersten und einem zweiten Lagesensor (38, 39, 40, 41), die dazu bestimmt sind, ein erstes und ein zweites elektrisches Signal auszugeben, welche jeweils repräsentativ sind für die Kippung des besagten Knüppels um die besagte erste und die besagte zweite Achse, wobei jedes der besagten elektrischen Signale mindestens ein Wirkglied (64, 66), das wenigstens eines der besagten Elemente der Maschine steuert, kontrolliert, wobei der besagte Knüppel um sich selbst um seine Längsachse (Z-Z) drehbar montiert ist und die Vorrichtung mindestens einen dritten Lagesensor (50, 51) enthält, welcher ein drittes elektrisches Signal ausgibt, das repräsentativ ist für die Drehung des Knüppels um sich selbst, wobei das besagte dritte elektrische Signal mindestens ein anderes Wirkglied (67) kontrolliert, welches mindestens ein anderes Element der besagten Maschine steuert, wobei die besagte Vorrichtung eine drehbare Welle (26) enthält, welcher der besagte dritte Lagesensor (50, 51) zugeordnet ist, und der besagte Knüppel (20 - 32) an die besagte Welle (26) so angelenkt ist, daß er um den besagten Kreuzungspunkt (33) der besagten ersten und der besagten zweiten Achse (X-X und Y-Y) kippen kann, wobei der Knüppel eine Muffe (34) durchdringt, in bezug auf welche er mit einem leichten Spiel, drehbar um sich selbst, montiert ist, und der besagte Knüppel fest mit einer Platte oder ähnlichem (37) verbunden ist, wobei diese Platte mit dem besagten ersten und dem besagten zweiten Lagesensor zusammenwirkt, während ein Block (25) vorgesehen ist,in bezug auf welchen zentral die besagte drehbare Welle (26) und peripherisch der besagte erste und der besagte zweite Lagesensor (38 - 41) montiert ist,
dadurch gekennzeichnet, daß sie gleitende Nadeln (42) enthält, welche durch die besagte Platte oder ähnliches (37) bewegt werden und den besagten ersten und den besagten zweiten Lagesensor (38 - 41) betätigen.

2. Vorrichtung nach Anspruch 1,
dadurch gekennzeichnet, daß sie wenigstens eine andere gleitende Nadel (42) enthält, welche durch die Drehung der besagten Welle (26) bewegt wird und den besagten dritten Lagesensor (50, 51) betätigt.

3. Vorrichtung nach einem der Ansprüche 1 oder 2,
dadurch gekennzeichnet, daß der besagte drehbare Knüppel und die besagte drehbare Welle über ein Kardangelenk angelenkt sind.

4. Vorrichtung nach dem Anspruch 3,
dadurch gekennzeichnet, daß das besagte Kardangelenk (31) an einem der Enden der besagten Welle (26), die an der Außenfläche des besagten Blocks (25) einen Vorsprung bildet, vorgesehen ist, während der oder die dritten Sensor(en) (50, 51) am entgegengesetzten Ende der besagten drehbaren Welle vorgesehen ist (sind).

5. Vorrichtung nach einem der Ansprüche 1 bis 4,
dadurch gekennzeichnet, daß der besagte Knüppel (34) verhindert ist, um die Achse (58) der besagten drehbaren Welle zu drehen.

6. Vorrichtung nach einem der Ansprüche 1 bis 5, welches Kraftfühlorgane (46, 49) enthält, die dem Kippen des besagten Knüppels um die besagte erste und die besagte zweite Achse zugeordnet sind,
dadurch gekennzeichnet, daß die besagten Kraftfühlorgane an dem besagten Block (25) angebracht sind und durch die besagte Platte oder ähnliches (37) betätigt werden.

7. Vorrichtung nach irgendeinem der Ansprüche 1 bis 6, dadurch gekennzeichnet, daß es wenigstens ein Kraftfühlorgan (53, 54) enthält, das mit der Drehung des Knüppels um sich selbst verbunden ist.

8. Vorrichtung nach dem Anspruch 7,
dadurch gekennzeichnet, daß das besagte Kraftfühlorgan (53, 54), das mit der Drehung des Knüppels um sich selbst verbunden ist, an dem besagten Block (25) angebracht ist.

9. Flugsteuersystem für ein Luftfahrzeug mit Kippreglern, Rollsteuerungsrudern und Giersteuerungsrudern, wobei das besagte System mindestens eine Steuervorrichtung enthält mit einem Knüppel, der kippbar um eine erste und um eine zweite Achse angeordnet ist, wobei diese Achsen sich kreuzen und quer zu dem besagten Knüppel liegen, so daß dieser um den Kreuzungspunkt der besagten ersten und der besagten zweiten Achse kippen kann, wobei wenigstens ein erster und ein zweiter Sensor vorgesehen sind, um ein erstes und ein zweites elektrisches Signal auszugeben, das repräsentativ ist für das Kippen des besagten Knüppels um die besagte erste und um die besagte zweite Achse, wobei der besagte Knüppel drehbar um sich selbst um seine Längsachse angebracht ist und die besagte Vorrichtung wenigstens einen dritten Lagesensor enthält, welcher ein drittes elektrisches Signal ausgibt, das repräsentativ ist für die Drehung des besagten Knüppels um sich selbst, wobei die besagten Kippregler und Rollsteuerungen über den besagten ersten und den besagten zweiten Lagesensor getätigt werden, während die besagte Giersteuerung über den besagten dritten Lagesensor getätigt wird, wobei die besagte Vorrichtung eine drehbare Welle enthält, welche dem besagten dritten Lagesensor zugeordnet ist und der besagte Knüppel an die besagte Welle angelenkt ist, um den besagten Kreuzungspunkt der besagten ersten und der besagten zweiten Achse kippen zu können, wobei der besagte Knüppel eine Muffe (34) durchdringt, in bezug auf welche er mit einem leichten Spiel um sich selbt drehbar angebracht ist und der besagte Knüppel fest mit einer Platte oder ähnlichem (37) verbunden ist, die mit dem besagten ersten und dem besagten zweiten Lagesensor fest zusammenwirkt, während ein Block (25) vorgesehen ist, in bezug auf welchen die besagte drehbare Welle (26) zentral und der besagte erste und der besagte zweite Lagesensor (38, 41) peripherisch angebracht sind,
dadurch gekennzeichnet, daß es gleitende Nadeln (42) enthält, die durch die besagte Platte oder ähnlichem (37) bewegt werden und den besagten ersten und den besagten zweiten Lagesensor (38, 41) aktivieren.

10. System nach dem Anspruch 9 mit einem oder mehreren Flugrechnern und zwei solcher Steuervorrichtungen, eine für den Piloten und die andere für einen Kopiloten,
dadurch gekennzeichnet, daß das besagte erste, das besagte zweite und das besagte dritte Signal, die von den beiden Steuervorrichtungen kommen, dem (den) Flugrechner(n) zugeleitet werden, welche(r) eindeutige Steueranweisungen an die entsprechenden Ruder ausgibt (ausgeben).

## Claims

1. Device for the control of elements (6, 7, 8, 9) of a machine (1), including a column (20, 32) intended to be actuated by only one hand of an operator and mounted so as to tilt around a first and a second axis (X-X and Y-Y), which axes are crossed and transversal to the said column, so that the latter can tilt around the crossing point (33) of the said first and second axes, at least one first and one second position sensors (38, 39, 40, 41) being provided to deliver a first and a second electrical signal representing respectively the tilting of the said column around the said first and the said second axis, the said electrical signals each controlling at least one actuator (64, 66) controlling at least one of the said elements of the machine, the said column being mounted so as to rotate on itself around its longitudinal axis (Z-Z) and the device including at least one third position sensor (50, 51) delivering a third electrical signal representing the rotation of the said column around itself, the said third electrical signal controlling at least one other actuator (67) controlling at least one other element of the said machine, the said device including a rotatable shaft (26) with which the said third position sensor (50, 51) is associated and the said column (20, 32) being articulated to the said shaft (26) so as to be able to tilt around the said crossing point (33) of the said first and second axes (X-X and Y-Y), the said column passing through a sleeve (34) with respect to which it is mounted, with a slight play, able to rotate around itself, and the said sleeve being integral with a plate or the like (37) interacting with the said first and second position sensors, while a block (25) is provided with respect to which the said rotatable shaft (26) is mounted centrally and the said first and second position sensors (38-41) are mounted peripherally, characterised in that it includes sliding needles (42) displaced by the said plate or the like (37) and activating the said first and second position sensors (38-41).

2. Device according to Claim 1, characterised in that it includes at least one other sliding needle (42) displaced by the rotation of the said shaft (26) and activating the said third position sensor (50, 51).

3. Device according to one of Claims 1 or 2, characterised in that the said column and the said rotatable shaft are articulated by means of a Cardan joint.

4. Device according to Claim 3, characterised in that the said Cardan joint (31) is provided at one of the extremities of the said shaft (26) protruding outside the said block (25), while the third sensor or sensors (50, 51) are provided at the opposite extremity of the said rotatable shaft.

5. Device according to one of Claims 1 to 4, characterised in that the said sleeve (34) is prevented from turning around the axis (58) of the said rotatable shaft.

6. Device according to one of Claims 1 to 5, including force feel members (46, 49) associated with the tilting of the said column around the said first and second axes, characterised in that the said force feel members are fixed to the said block (25) and actuated by the said plate or the like (37).

7. Device according to one of Claims 1 to 6, characterised in that it includes at least one force feel member (53, 54) associated with the rotation of the column about itself.

8. Device according to Claim 7, characterised in that the said force feel member (53, 54) associated with the rotation of the column about itself is fixed to the said block (25).

9. Flight control system intended for an aircraft including pitch control surfaces, roll control surfaces and yaw control surfaces, the said system including at least one control device comprising a column mounted so as to tilt around a first and a second axis, which axes are crossed and transversal to the said column, so that the latter can tilt around the crossing point of the said first and second axes, at least one first and one second position sensors being provided to deliver a first and one second electrical signal representing respectively the tilting of the said column around the said first and the said second axis; the said column being mounted so as to rotate on itself around its longitudinal axis and the said device including at least one third position sensor delivering a third electrical signal representing the rotation of the said column around itself, the said pitch and roll control surfaces being controlled by the said first and second position sensors, while the said yaw control surface is controlled by the said third position sensor, the said device including a rotatable shaft with which the said third position sensor is associated and the said column being articulated to the said shaft so as to be able to tilt around the said crossing point of the said first and second axes, the said column passing through a sleeve (34) with respect to which it is mounted, with a slight play, so as to rotate about itself, and the said sleeve being integral with a plate or the like (37) interacting with the said first and second position sensors, while a block (25) is provided with respect to which the said rotatable shaft (26) is mounted centrally and the said first and second position sensors (38, 41) are mounted peripherally, characterised in that it includes sliding needles (42) displaced by the said plate or the like (37) and activating the said first and second position sensors (38, 41).

10. System according to Claim 9, including one or more flight computers and two such control devices, one for the pilot and the other for a co-pilot, characterised in that the said first, second and third signals originating from the two control devices are addressed to the said flight computer(s) which deliver(s) single control reference values to the corresponding control surfaces.
